(19) Europäisches Patentamt / European Patent Office / Office européen des brevets

(11) **EP 2 012 526 A1**

(12) **DEMANDE DE BREVET EUROPEEN**

(43) Date de publication:
**07.01.2009 Bulletin 2009/02**

(51) Int Cl.:
*H04N 3/15* (2006.01)     *H04N 5/217* (2006.01)

(21) Numéro de dépôt: **08158981.4**

(22) Date de dépôt: **25.06.2008**

(84) Etats contractants désignés:
**AT BE BG CH CY CZ DE DK EE ES FI FR GB GR
HR HU IE IS IT LI LT LU LV MC MT NL NO PL PT
RO SE SI SK TR**
Etats d'extension désignés:
**AL BA MK RS**

(30) Priorité: **06.07.2007 FR 0704906**

(71) Demandeur: **THALES
92200 Neuilly sur Seine (FR)**

(72) Inventeur: **Blanc, Philippe
06140 Nice (FR)**

(74) Mandataire: **Esselin, Sophie et al
Marks & Clerk France
Conseils en Propriété Industrielle
Immeuble " Visium "
22, avenue Aristide Briand
94117 Arcueil Cedex (FR)**

(54) **Procédé et dispositif d'observation**

(57) L'invention concerne un dispositif imageur comprenant : des moyens de détection comportant une matrice d'éléments de détection (30) pour générer des signaux de détection représentatifs d'un rayonnement reçu, des moyens (36, 38, 40, 42, 44, 46) pour diriger un faisceau de rayons en direction des moyens de détection, des moyens de stockage (32) comportant plusieurs éléments de stockage pour accumuler pendant un temps d'intégration les signaux de détection obtenus par la matrice d'éléments de détection (30), chaque élément de stockage lié à un des éléments de détection, et des moyens de traitement (34) configurés pour échantillonner lesdits signaux de détection accumulés pendant le temps d'intégration, caractérisé en ce que ledit dispositif comporte des moyens de filtrage (34, 44, 50) pour appliquer un filtre audits signaux de détection avant l'échantillonnage desdits signaux de détection accumulés.

Fig. 3

**Description**

L'invention concerne un procédé et un dispositif d'observation, plus particulièrement un procédé et un dispositif d'observation optique. L'invention concerne, en particulier, les systèmes d'observation de la Terre dans le domaine optique.

L'image acquise par un système d'observation optique peut être vue, en première approximation, comme l'échantillonnage de l'objet observé - préalablement convolué par la tache image du système optique - avec l'addition d'un bruit de détection et d'un bruit photonique.

La fonction de transfert (transformée de Fourier de la tache image) d'un système optique, inhérente à la forme de la pupille d'entrée et à la qualité du système optique, pose généralement deux problèmes de qualité image après échantillonnage par la matrice de détecteurs :

- les faibles valeurs du module de la fonction de transfert (FTM) pour les hautes fréquences (jusqu'à la fréquence de Nyquist, égale à la demi-fréquence d'échantillonnage) impliquent un flou dans les images brutes (sorties instrument) ;
- l'image n'étant généralement pas échantillonnée suivant les conditions du théorème de Shannon, la fréquence de Nyquist est inférieure à la fréquence de coupure et, lors de l'échantillonnage, les composantes fréquentielles de l'objet perçues au-delà du carré de Nyquist génèrent du repliement de spectre. Ce repliement de spectre, en fonction de son importance, peut corrompre l'intégrité de l'image et affecter sensiblement les traitements numériques de déconvolution ou d'extraction d'information comme les détecteurs de contour, ou les méthodes de mesure de parallaxes (pour la reconstruction 3D).

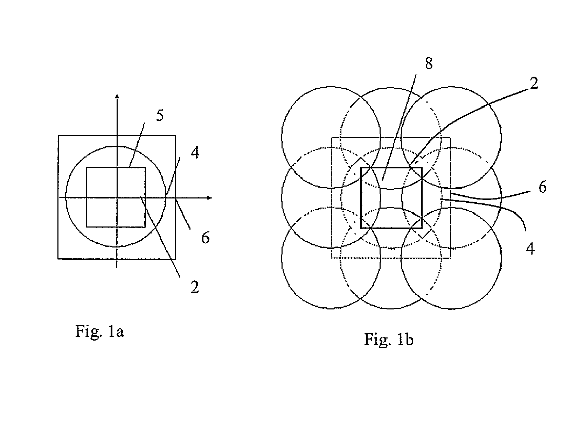

Les figures 1a et 1b sont des graphes illustrant le phénomène de repliement de spectre lors d'un échantillonnage 2D par un instrument optique à l'art antérieur. Les axes des figure 1a et 1b représentent les fréquences spatiales dans les directions x et y. La fréquence de Nyquist 2, le carré de Nyquist, la fréquence de coupure de l'instrument 4 et la fréquence d'échantillonnage 6 sont représentées sur la figure 1a, qui représente la situation avant échantillonnage. La fréquence de Nyquist 2 est inférieure à la fréquence de coupure 4 et un repliement de spectre se produit donc lors de l'échantillonnage. La figure 1b montre le repliement de spectre 8.

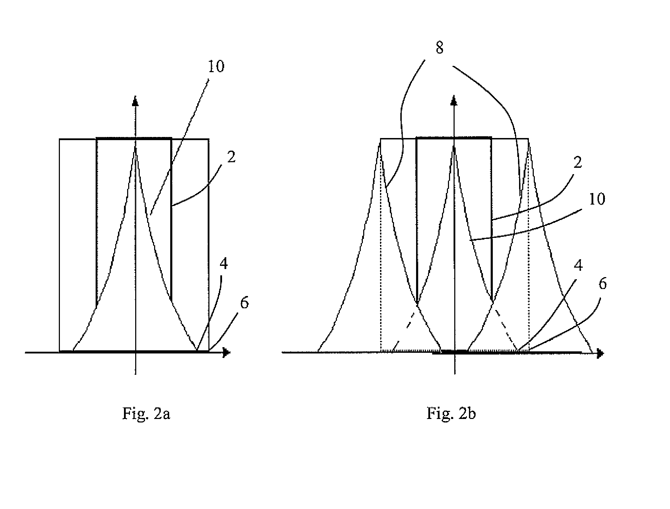

Les figures 2a et 2b sont les sections transversales des graphes de figures 1a et 1b dans la direction x. Les figures 2a et 2b illustrent le phénomène de repliement de spectre lors d'un échantillonnage par l'instrument optique de la figure 1, et montrent aussi la trace du module de la fonction de transfert (FTM) 10 en fonction de la fréquence spatiale. Comme illustré sur les figures 2a et 2b la fonction de transfert (FTM) 10 a des valeurs faibles pour les hautes fréquences (jusqu'à la fréquence de Nyquist). La figure 2a représente la situation avant échantillonnage et la figure 2b représente la situation après échantillonnage. La figure 2b montre le repliement de spectre 8.

Le problème de repliement de spectre présent dans une image ne peut être résolu dans le cas général. Seule une connaissance *a priori* des caractéristiques de l'objet observé (non envisageable de manière générale dans le cas de l'observation de la Terre) ou l'utilisation de plusieurs images du même objet suivant des grilles d'échantillonnage légèrement décalées permettent d'atténuer le phénomène de repliement de spectre, pour exemple la méthode Hypermode ou Supermode du CNES qui est décrit dans la demande de brevet internationale WO 97/05451.

Quant à la déconvolution, la difficulté majeure réside dans le bruit de mesure : en effet, l'application du filtre de déconvolution transforme le bruit de mesure à l'origine indépendant (ou blanc) en un bruit de plus grand écart type et corrélé (sa Densité Spectrale de Puissance n'est alors plus constante sur le carré de Nyquist). Un bruit corrélé est dit coloré par opposition avec un bruit blanc. Cette "coloration" du bruit, rendant le bruit texturé, accompagnée d'un accroissement sensible de son écart type génère des artefacts visuels pouvant être rédhibitoires pour l'exploitation opérationnelle des images après traitement de déconvolution.

Enfin, une autre difficulté réside dans la complexité et donc le surcoût de puissance de calcul et de mémoire embarquées nécessaires à l'application d'une convolution discrète à bord.

L'objet de l'invention est de proposer un dispositif et une méthode permettant une déconvolution et/ou une suppression des effets de repliement.

Plus précisément, l'invention propose un dispositif imageur comprenant : des moyens de détection comportant une matrice d'éléments de détection pour générer des signaux de détection représentatifs d'un rayonnement reçu, des moyens pour diriger un faisceau de rayons en direction des moyens de détection, des moyens de stockage comportant plusieurs éléments de stockage pour accumuler pendant un temps d'intégration les signaux de détection obtenus par la matrice d'éléments de détection, chaque élément de stockage lié à un des éléments de détection, et des moyens de traitement configurés pour échantillonner lesdits signaux de détection accumulés pendant le temps d'intégration, caractérisé en ce que ledit dispositif comporte des moyens de filtrage pour appliquer un filtre audits signaux de détection avant l'échantillonnage desdits signaux de détection accumulés, les éléments de détection sont séparés par un écart de séparation, les positions de détection voisines étant séparées par des écarts de position et lesdits écarts de position étant égaux ou inférieurs à l'écart de séparation, et sont sélectionnés afin que le filtre corresponde à un filtre anti-repliement.

De cette manière, par le filtrage avant l'échantillonnage, il est possible de filtrer les signaux sans induire une coloration du bruit de mesure et ainsi, éviter la génération des artefacts visuels. Typiquement, le bruit de mesure reste blanc, même si le filtre appliqué est un filtre dit de déconvolution.

De préférence, les moyens de traitement sont configurés de manière à générer un signal d'image qui représente une image, utilisant lesdits signaux échantillonnés.

Ledit faisceau peut être un faisceau de lumière visible. Typiquement, les moyens de direction comportent un système optique. Le système optique peut comporter une lentille ou un système des lentilles. Le système optique peut comporter un télescope.

Typiquement la forme de filtre est sélectionnée par rapport à une caractéristique du système optique. Ladite caractéristique peut être la fonction de transfert de modulation (FTM).

Typiquement, la matrice d'éléments de détection est positionnée dans le plan focal du système optique. En pratique la position de la matrice d'éléments de détection peut varier par quelques microns par rapport au plan focal.

Avantageusement, les moyens de filtrage comportent des moyens de déplacement pour déplacer lesdits moyens de détection par rapport audit faisceau ou pour déplacer ledit faisceau par rapport auxdits moyens de détection.

Les moyens de filtrage peuvent être des moyens opto-mécaniques. Ainsi, dans le cas où sont envisagés des traitements nécessitant l'application d'un filtre numérique, l'utilisation d'un filtre opto-mécanique permet de ne pas accroître la puissance de calcul numérique nécessaire à embarquer. Cette caractéristique est de valeur en particulier dans le cas ou le dispositif est destiné à être installé à bord d'un satellite ou, de manière générale, dans un système d'observation où la scène est fixe (ou rendu fixe) par rapport au plan focal.

Chacun des signaux de détection accumulés, qui est généré utilisant une partie respective du faisceau, peut comporter aussi les signaux de détection qui sont générés utilisant au moins une autre partie dudit faisceau.

Chacun des éléments de stockage peut comporter une unité de mémoire respective. Autrement, chacun des éléments de stockage peut être une partie respective d'une seule unité de mémoire. Chacun des éléments de stockage peut être un élément dans une base de données.

De préférence, chacun des éléments de détection est configuré de manière à générer les signaux de détection respectifs.

Typiquement, chacun des éléments de détection reçoit une partie respective dudit faisceau, et chacune des parties dudit faisceau correspond à une partie respective de ladite image.

Lesdits moyens de déplacement peuvent déplacer soit lesdits moyens de détection soit le faisceau. Lesdits moyens de déplacement peuvent comporter un système de miroirs de type tip/tilt.

Avantageusement, lesdits moyens de déplacement sont configurés de manière à mettre en place la matrice d'éléments de détection et le faisceau, dans une série de positions de détection relative pendant le temps d'intégration.

Avantageusement, chacune des positions de détection est maintenue pendant un des intervalles de détection donné. Ainsi, la forme de filtrage peut être sélectionnée facilement par une sélection de la série de positions de détection et des intervalles de détection.

Avantageusement, au moins un des intervalles de détection est différent d'au moins un des autres intervalles de détection.

Avantageusement, les éléments de détection sont séparés par un écart de séparation, les positions de détection voisines sont séparées par des écarts de position, lesdits écarts de position étant égaux ou inférieurs à l'écart de séparation. Ainsi, il est possible d'appliquer un filtre sur-échantillonné permettant l'application de filtrage de repliement de spectre ou de super-résolution.

Avantageusement, l'écart de position est un sous-multiple de l'écart de séparation entre les éléments de détection. Ledit sous-multiple peut être la moitié dudit écart de séparation entre les éléments de détection. Les positions de détection et les intervalles de détection peuvent être choisis afin que le filtre ait une forme recherchée.

La série de positions de détection et les intervalles de détection peut être sélectionnés afin que le filtre corresponde à un filtre numérique quelconque. Le filtre peut correspondre à un filtre de déconvolution et/ou un filtre anti-repliement. De préférence, les positions de détection et les intervalles de détection sont sélectionnés afin que le filtre corresponde, à un filtre de déconvolution ou à un filtre anti-repliement.

Avantageusement, chaque position de détection et chaque intervalle de détection sont représentatifs d'un coefficient de filtrage respectif

De préférence, si le filtre comporte un ensemble de coefficients négatifs et un ensemble de coefficients positifs, un premier ensemble des positions de détection représente l'ensemble des coefficients négatifs, et un deuxième ensemble des positions de détection représente l'ensemble des coefficients positifs.

Avantageusement, les moyens de traitement sont configurés de manière à générer un premier signal d'image selon les signaux de détection accumulés utilisant le premier ensemble de positions de détection, et les moyens de traitement sont configurés de manière à générer un deuxième signal d'image selon les signaux de détection accumulés utilisant le deuxième ensemble de positions de détection.

De préférence, les moyens de traitement sont configurés de manière à soustraire le premier signal d'image et le deuxième signal d'image pour obtenir un signal d'image composé.

Selon une variante de l'invention, les moyens de filtrage comportent une matrice de commutation qui est adaptée à changer les liaisons entre les éléments de détection et les éléments de stockage de telle façon que chacun des signaux de détection accumulés comprend les signaux de détection d'un élément de détection respectif et les signaux de détection d'au moins un autre élément de détection. Ainsi, l'invention fournit un système alternatif, qui n'est pas un système opto-mécanique, pour filtrer les signaux avant échantillonnage.

Avantageusement, la matrice de commutation est opérable de telle façon que chacun des éléments de stockage est lié à chaque élément de détection d'un ensemble respectif des éléments de détection pendant le temps d'intégration.

La matrice de commutation peut être configurée pour lier ledit élément de stockage à chaque élément de détection dudit ensemble respectif des éléments de détection pendant un intervalle de détection respectif.

De préférence, les ensembles des éléments de détection et les intervalles de détection sont sélectionnés afin que le filtre corresponde à un filtre de déconvolution et/ou d'anti-repliement.

Le filtre peut comporter un ensemble de coefficients négatifs et un ensemble de coefficients positifs, et un premier ensemble des intervalles de détection représente l'ensemble des coefficients négatifs, et un deuxième ensemble des intervalles de détection représente l'ensemble des coefficients positifs. Les moyens de traitement peuvent être configurés de manière à générer un premier signal d'image selon les signaux de détection accumulés pendant le premier ensemble des intervalles de détection, et les moyens de traitement peuvent être configurés de manière à générer un deuxième signal d'image selon les signaux de détection accumulés pendant le deuxième ensemble des intervalles de détection. Les moyens de traitement peuvent être configurés de manière à soustraire le premier signal d'image et le deuxième signal d'image pour obtenir un signal d'image composé.

Le dispositif peut être destiné à être embarqué dans un satellite pour l'observation de la Terre. Dans ce cas, typiquement, il faut que la scène observée soit fixe par rapport au plan focal (hors bougés volontaires des moyens de détection). Typiquement, il faut, par exemple, une observation en orbite géostationnaire. On peut aussi en orbite défilante mais dans ce cas-là il faut un mécanisme de compensation du mouvement relatif satellite/Terre, par exemple un miroir en mouvement, ou un basculement de la plate-forme en tangage.

L'invention a aussi pour objet un procédé d'acquisition et de traitement d'une image dans lequel on fournit des moyens de détection comportant une matrice d'éléments de détection, on fournit des moyens pour diriger un faisceau de rayons en direction des moyens de détection, on fournit des plusieurs éléments de stockage, chaque élément de stockage lié à un des éléments de détection, on génère des signaux de détection qui sont représentatifs d'un rayonnement reçu utilisant la matrice d'éléments de détection, la matrice d'éléments de détection accumule les signaux de détection qui sont obtenus dans un temps d'intégration, et on échantillonne desdits signaux de détection accumulés, le procédé étant caractérisé en ce qu'on on déplace lesdits moyens de détection par rapport audit faisceau ou ledit faisceau par rapport auxdits moyens de détection pendant le temps d'intégration, ou on change des liaisons entre les éléments de détection et les éléments de stockage pendant le temps d'intégration.

L'invention sera mieux comprise et d'autres avantages apparaîtront à la lecture de la description qui va suivre donnée à titre non limitatif et grâce aux figures annexées parmi lesquelles :

les figures 1a et 1b, déjà décrites, sont des graphes illustrant le phénomène de repliement de spectre lors d'un échantillonnage 2D par un instrument optique, de l'art antérieur ;

les figures 2a et 2b, déjà décrites, sont des graphes illustrant le repliement de spectre et atténuation importante du module de la fonction de transfert (FTM) pour les hautes fréquences par un instrument optique de l'art antérieur ;

la figure 3 représente un dispositif d'observation selon l'invention ;

la figure 4 est une vue d'une matrice d'éléments de détection du dispositif de la figure 3;

la figure 5 représente un enchaînement des positions par pas de demi-pixel de la matrice d'éléments de détection du dispositif d'observation de la figure 3 par rapport de plan focal ;

les figures 6a, 6b, 6c et 6d sont des graphes illustrant l'application d'un filtre anti-repliement avant échantillonnage par un dispositif d'observation selon l'invention ;

les figures 7a, 7b, 7c et 7d sont des graphes illustrant l'application d'un filtre de déconvolution avec un filtre anti-repliement avant échantillonnage par un dispositif d'observation selon l'invention;

la figure 8 représente une variante du dispositif de la figure 3 ;

la figure 9 représente schématiquement l'application d'un filtre ;

la figure 10 représente un module de la fonction de transfert (FTM) en fonction de la fréquence spatiale dans la direction x;

la figure 11 est une image brute générée par le dispositif de la figure 3, sans filtrage anti-repliement ou filtrage de déconvolution ;

la figure 12 représente la FTM de la figure 10 et de cette FTM multipliée par une fonction de transfert représentant un filtre déconvolution, dans la direction x ;

la figure 13 est l'image brute de la figure 11 convoluée par la fonction de transfert de la figure 12 par une procédure opto-mécanique avant-échantillonnage ;

la figure 14 représente la FTM de la figure 10 et cette FTM multipliée par une fonction de transfert représentant un filtre de déconvolution et anti-repliement, dans la direction x ;

la figure 15 est l'image brute de la figure 11 convoluée par le fonction de transfert de la figure 14, par une procédure opto-mécaniclue avant-échantillonnage.

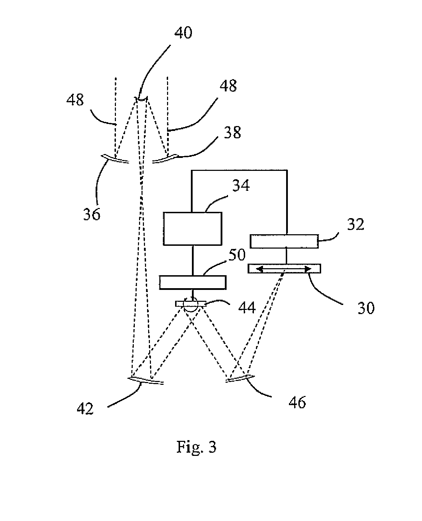

On se réfère tout d'abord à la figure 3 pour décrire un exemple d'un dispositif imageur selon l'invention.

Le dispositif comporte un télescope à réflexion et une matrice d'éléments de détection 30 positionnés au plan focal du télescope à réflexion. Les éléments de détection sont de type CCD ou CMOS.

La matrice d'éléments de détection 30 est liée à une unité de stockage et de commande 32. L'unité de stockage et de commande 32 est lié à un contrôleur 34.

Le télescope à réflexion comporte un système de miroirs 36 38 40 42 44 46 positionnés telle façon qu' un rayonnement reçu à une entrée du télescope est dirigé vers la matrice d'éléments de détection 30 et focalisé sur la matrice d'éléments de détection 30.

La voie d'un faisceau d'un rayon est indiquée dans la figure 3 par les lignes pointillées 48.

Le système de miroirs comprend un miroir de type tip/tilt 44. Typiquement, le miroir de type « tip/tilt » 44 est de type miroir à rotation rapide (FSM). Le miroir de type tip/tilt 44 est lié à un circuit de commande 50, et le circuit de commande 50 est lié au contrôleur 34.

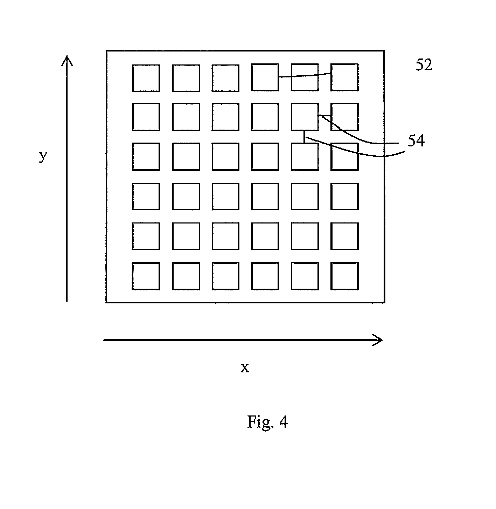

La figure 4 est une vue plus détaillée de la matrice d'éléments de détection 30. La matrice d'éléments de détection 30 est une matrice carrée arrangée dans les directions orthogonales x et y. Chacun des éléments de détection 52 est séparé par un écart de séparation 54 aux éléments de détection voisins dans les directions x et y.

Le miroir de type tip/tilt 44 est positionné de telle façon qu'un opération de tip ou tilt est telle qu'elle permet de déplacer le rayonnement sur le pian focal. Les opérations de tip ou tilt sont faites sous contrôle du contrôleur 34.

Chaque élément de détection est lié à une mémoire dans l' unité de stockage et commande 32. Lors d'opération du dispositif, chaque élément de détection génère les signaux électriques en réponse aux photons du rayonnement reçu et, pour chaque élément de détection, les signaux électriques sont accumulés par la mémoire correspondante.

Après un temps d'intégration, le contrôleur 34 lie le signal accumulé par chaque mémoire, dans une procédure d'échantillonnage. Le contrôleur comporte un processeur, et le processeur génère un signal d'image utilisant les signaux lus. Le signal d'image représente l'image vue par le télescope à réflexion. Typiquement le signal d'image est stocké par le contrôleur 34. Le processeur peut transmettre le signal d'image à une unité de visualisation pour affichage d'image sur un écran, ou une unité de traitements pour l'exploitations opérationnelles.

Au début du temps d'intégration chaque élément de détection reçoit une partie dudit rayonnement reçu. Chaque partie dudit rayonnement reçu correspond à une partie de l'image vue par le télescope et ainsi à une partie de l'image représentée par le signal d'image. On peut dire que chaque partie de l'image représentée par le signal d'image est un pixel, et on peut dire aussi que chaque élément de détection correspond, l'un à l'autre, à un pixel. Typiquement, le signal d'image comporte un ensemble des signaux, chacun des signaux correspondant à un pixel.

Lors du temps d'intégration, le contrôleur 34 contrôle le miroir de type tip/tilt 44 de telle façon que le rayonnement sur le plan focal est déplacé vers une série de positions de détection, et que chaque position de détection est maintenue pendant un intervalle de détection respectif, autrement dit un temps d'intégration élémentaire.

Les déplacements suivent des positions successives de fractions de pixel du plan focal, tout en intégrant sans interruption les photons au niveau de la matrice d'éléments de détection.

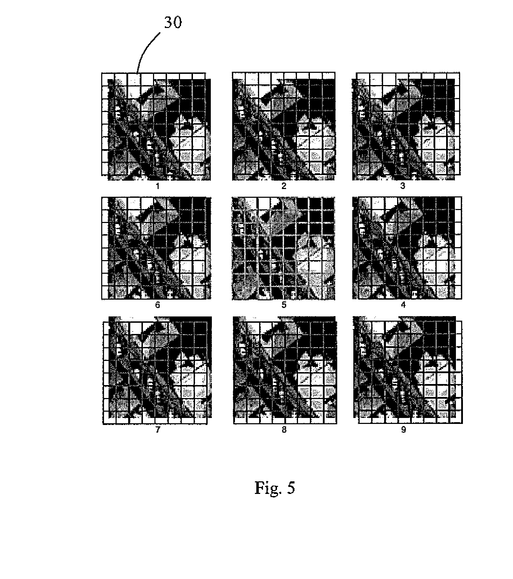

Un exemple d'une série de positions de détection est montré sur la figure 5, dans laquelle la matrice d'éléments de détection 30 est représentée par une grille, et chaque carré de la grille correspond à la position d'un des éléments de détection. L'image montrée au-dessous de la grille représente une image vue par le télescope et focalisée sur la matrice d'éléments de détection. Les neuf positions dans la série sont numérotées de 1 à 9, et on peut voir que chaque position successive est déplacée par un demi-pixel.

Le temps d'intégration élémentaire de chacune de ces positions du plan focal est modulé de telle sorte que l'image résultante à la fin du temps d'intégration globale a été convoluée avant la détection par la matrice d'éléments de détection.

Plus précisément, le temps passé pour chaque décalage est choisi proportionnel à la valeur du filtre de convolution correspondant à ce décalage. Si le filtre de convolution présente des coefficients négatifs, l'acquisition doit être décomposée en deux acquisitions distinctes : l'une correspondant à l'ensemble des coefficients positifs du filtre (et des positions sub-pixel de plan focal correspondantes), l'autre à l'ensemble des coefficients négatifs. L'image convoluée recherchée est alors la soustraction de ces deux images.

L'application d'un filtre de convolution par ce procédé opto-mécanique se plaçant avant l'échantillonnage final, il peut être effectué de manière sur-échantillonnée. Le facteur de sur-échantillonnage est directement lié à la fraction de pixel des décalages utilisée entre chaque position successive : ainsi, un ensemble de décalages par pas de demi-pixel permet d'appliquer des filtres de manière sur-échantillonnée d'un facteur 2 par rapport au pas final.

Cette possibilité permet ainsi d'appliquer des filtres pour :

- atténuer le repliement de spectre (filtre passe-bas) ;
- atténuer le repliement de spectre et déconvoluer ;

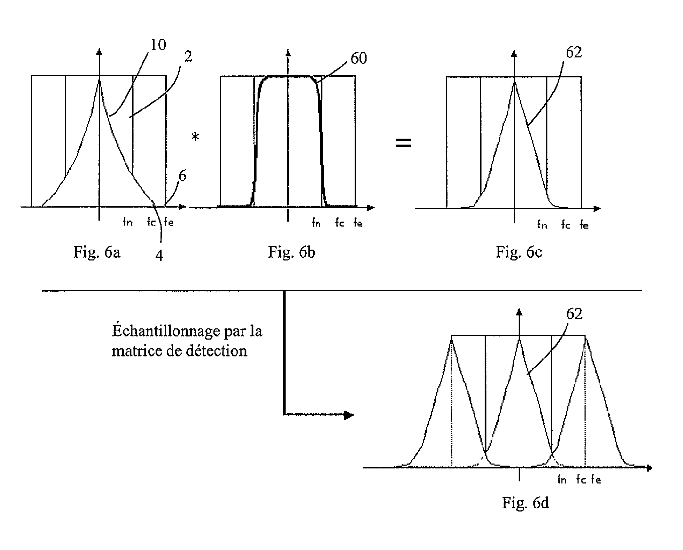

Les figures 6a à 6d montrent l'effet d'application d'un filtre anti-repliement avant échantillonnage, pour le spectre d'instrument optique des figures 2a et 2b.

La figure 6a est identique à la figure 2a et montre la fréquence de Nyquist 2, la fréquence de coupure de l'instrument 4, la fréquence d'échantillonnage 6 et la forme de la fonction de transfert (FTM) 10 pour l'instrument optique des figures 2a et 2b. La figure 6b est un graphe illustrant la forme d'un filtre anti-repliement 60. La figure 6c est une graphe illustrant la forme 62 de la fonction de transfert (FTM) 10 après convolution opto-mécanique avec le filtre 60 de la figure 6b, avant échantillonnage. On peut voir que la partie de la fonction de transfert autour de la fréquence de Nyquist 2 est supprimée. La figure 6d est un graphe illustrant le repliement de spectre après échantillonnage. On peut voir que les effets de repliement sont fortement réduits en comparaison avec le spectre de figure 2b après échantillonnage.

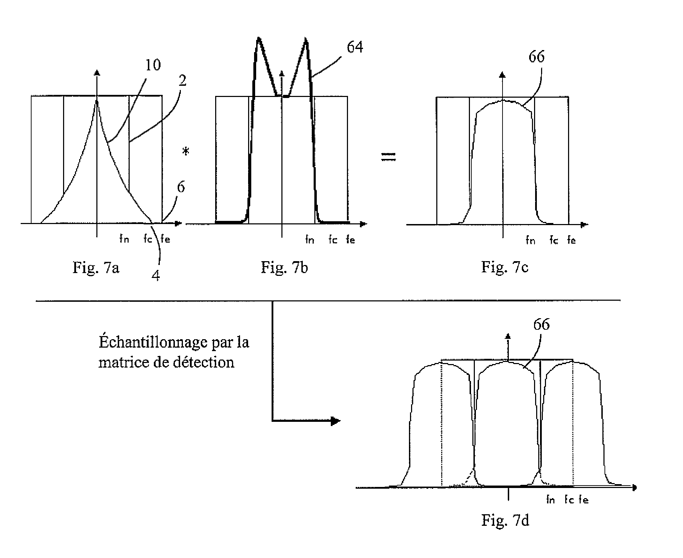

Les figures 7a à 7d montrent l'effet d'un application d'un filtre composant un filtre de déconvolution avec un filtre anti-repliement avant échantillonnage. La figure 7a est identique à la figure 2a et montre la fréquence de Nyquist 2, la fréquence de coupure de l'instrument 4, la fréquence d'échantillonnage 6 et la forme de la fonction de transfert (FTM) 10 pour l'instrument optique des figures 2a et 2b. La figure 7b est un graphe illustrant la forme d'un filtre 64 composant un filtre de déconvolution avec un filtre anti-repliement. La figure 7c est une graphe illustrant la forme 66 de la fonction de transfert (FTM) 10 après convolution opto-mécanique avec le filtre 64 de la figure 5b, avant échantillonnage. La figure 7d est un graphe illustrant le repliement de spectre après échantillonnage. On peut voir que les effets de repliement sont fortement réduits en comparaison avec le spectre de la figure 2b après échantillonnage et que la fonction de transfert est aplatie pour les fréquences inférieures à celles de la fréquence de Nyquist.

Dans d'autres exemples, d'autres filtres peuvent être appliqués par un choix approprié des déplacements et des intervalles de détection.

A titre d'exemple, on décrit le principe de convolution opto-mécanique sur un filtre de taille 7x7 (anti-repliement + rehaussement de contraste) avec un facteur de sur-échantillonnage de 2 par rapport au pas de l'image finale. Les résultats de ce filtre sont reportés ci-dessous.

| | | Décalage en colonne | | | | | |
|---|---|---|---|---|---|---|---|
| | | 1.5 | -1 | -0.5 | 0 | 0.5 | 1 | 1.5 |
| Décalage en ligne | -1.5 | 0 | 0 | -0.0575 | -0.115 | -0.0575 | 0 | 0 |
| | -1 | 0 | 0 | -0.115 | -0.23 | -0.115 | 0 | 0 |
| | -0.5 | -0.0575 | -0.115 | 0.1775 | 0.47 | 0.1775 | -0.115 | -0.0575 |
| | 0 | -0.115 | -0.23 | 0.47 | 1.17 | 0.47 | -0.23 | -0.115 |
| | 0.5 | -0.0575 | -0.115 | 0.1775 | 0.47 | 0.1775 | -0.115 | -0.0575 |
| | 1 | 0 | 0 | -0.115 | -0.23 | -0.115 | 0 | 0 |
| | 1.5 | 0 | 0 | -0.0575 | -0.115 | -0.0575 | 0 | 0 |

Table 1

Il est à noter que ce filtre possède des coefficients positifs et des coefficients négatifs. Il y a 9 coefficients positifs (en gras) et 24 coefficients négatifs (en italique). La somme des coefficients du filtre vaut 1, et la somme de ses valeurs absolues vaut 6.52.

Dans ce cas où le filtre possède des coefficients positifs et des coefficients négatifs, il y a deux périodes d'acquisition des signaux, ayant deux temps d'intégration. Pendant une des deux périodes d'acquisition, ayant un temps d'intégration $T^+$, le rayonnement sur le plan focal est déplacé vers une première série de positions correspondant aux coefficients positifs du filtre. Pendant l'autre des deux périodes d'acquisition, ayant un temps d'intégration $T^-$, le rayonnement sur le plan focal est déplacé vers une deuxième série de positions correspondant aux coefficients négatifs du filtre.

On considérera que le temps de transition $T_t$ ($\sim$1 $\mu$s) entre deux positions successives (1/2 pixel) est négligeable compte tenu de la vitesse des miroirs de tip/tilt. On note $\alpha$ un réel positif le coefficient de proportionnalité entre la valeur absolue des coefficients du filtre et les temps d'intégration élémentaires.

• Convolution opto-mécanique correspondant aux 9 coefficients positifs :

Les décalages successifs et les temps d'intégration pour la convolution opto-mécanique correspondant aux 9 coefficients positifs sont montrés dans la table 2.

Table 2

|  | Décalage en x (pixel) | Décalage en y (pixel) | Temps d'intégration |
|---|---|---|---|
| Position 1 | -0.5 | -0.5 | 0.1775 $\alpha$ |
| Position 2 | 0 | -0.5 | 0.47 $\alpha$ |
| Position 3 | 0.5 | -0.5 | 0.1775 $\alpha$ |
| Position 4 | -0.5 | 0 | 0.47 $\alpha$ |
| Position 5 | 0 | 0 | 1.17 $\alpha$ |
| Position 6 | 0.5 | 0 | 0.47 $\alpha$ |
| Position 7 | -0.5 | 0.5 | 0.1775 $\alpha$ |
| Position 8 | 0 | 0.5 | 0.47 $\alpha$ |
| Position 9 | 0.5 | 0.5 | 0.1775 $\alpha$ |

Au total, le temps d'intégration total $T^+$ pour la convolution des termes positifs est 3.76 $\alpha$ auquel s'ajoute 8 fois le temps de transitions $T_t$ (supposé négligeable).

$$\mathrm{T}^+ = 3.76\alpha + 8\mathrm{T}_t \approx 3.76\alpha \qquad (1)$$

• Convolution opto-mécanique correspondant aux 24 coefficients négatifs :

Les décalages successifs et les temps d'intégration pour la convolution opto-mécanique correspondant aux 9 coefficients positifs sont montrés dans la table 3.

Table 3

|  | Décalage en x (pixel) | Décalage en y (pixel) | Temps d'intégration |
|---|---|---|---|
| Position 1 | -0.5 | -1.5 | 0.0575 $\alpha$ |
| Position 2 | 0 | -1.5 | 0.115 $\alpha$ |
| Position 3 | 0.5 | -1.5 | 0.0575 $\alpha$ |
| Position 4 | -0.5 | -1.0 | 0.115 $\alpha$ |
| Position 5 | 0 | -1.0 | 0.23 $\alpha$ |

(suite)

|  | Décalage en x (pixel) | Décalage en y (pixel) | Temps d'intégration |
|---|---|---|---|
| Position 6 | 0.5 | -1.0 | 0.115 $\alpha$ |
| Position 7 | -1.5 | -0.5 | 0.0575 $\alpha$ |
| Position 8 | -1.0 | -0.5 | 0.115 $\alpha$ |
| Position 9 | 1.0 | -0.5 | 0.115 $\alpha$ |
| Position 10 | 1.5 | -0.5 | 0.0575 $\alpha$ |
| Position 11 | -1.5 | 0 | 0.115 |
| Position 12 | -1.0 | 0 | 0.23 |
| Position 13 | 1.0 | 0 | 0.23 |
| Position 14 | 1.5 | 0 | 0.115 |
| Position 15 | -1.5 | 0.5 | 0.0575 |
| Position 16 | -1.0 | 0.5 | 0.115 |
| Position 17 | 1.0 | 0.5 | 0.115 |
| Position 18 | 1.5 | 0.5 | 0.0575 |
| Position 19 | -0.5 | 1.0 | 0.115 |
| Position 20 | 0 | 1.0 | 0.23 |
| Position 21 | 0.5 | 1.0 | 0.115 |
| Position 22 | -0.5 | 1.5 | 0.0575 |
| Position 23 | 0 | 1.5 | 0.115 |
| Position 24 | 0.5 | 1.5 | 0.0575 |

Compte tenu des différentes positions successives pour l'ensemble des coefficients négatifs, le temps d'intégration T vérifie dans ce cas :

$$T^- = 2.76\alpha + 25T_t \approx 2.76\alpha \qquad (2)$$

Au total, le temps d'intégration T vaut

$$T = 6.52\alpha + 33T_t \qquad (3)$$

Typiquement, on veillera à ce que le coefficient $\alpha$ soit supérieur à $500T_t$ de façon à ce que le temps de transition total ne dépasse pas 1 % du temps d'intégration : dans ce cas, la dégradation de la FTM induite par ces bougés de l'ordre du demi-pixel est alors jugé négligeable.

Après chacune des deux périodes d'acquisition, le contrôleur 34 lit les signaux accumulés par chaque mémoire. Ainsi, on obtient un premier ensemble des signaux pour les coefficients positifs, chacun des signaux correspondant à un pixel, et un deuxième ensemble des signaux pour les coefficients négatifs, chacun des signaux correspondant à un pixel.

Le premier ensemble des signaux et le deuxième ensemble des signaux sont procédés ensemble pour obtenir un signal d'image composé. Typiquement, le deuxième ensemble des signaux est soustrait du premier ensemble des signaux pour obtenir le signal d'image composé.

Il est à noter que même si le bruit de mesure reste blanc après la convolution opto-mécanique, le rapport signal sur bruit peut être dégradé par rapport à celui d'une acquisition classique (sans convolution opto-mécanique) pour un même temps global d'intégration. En effet, dans le cas de l'application d'un filtre de convolution présentant des valeurs négatives, le facteur de dégradation du rapport signal sur bruit correspond à la somme des valeurs absolues des coefficients du filtre (norme L1 du filtre) (par d'exemple 6.52 dans le cas traité en exemple ci-dessus).

Dans une variante du dispositif de la figure 3, le miroir de type tip/tilt 44 est remplacé par un miroir fixe, et le dispositif comporte un moteur configuré pour bouger la matrice. Pour cette variante, les décalages sont effectués par mouvement de la matrice, par exemple par des moteurs piezo-électrique.

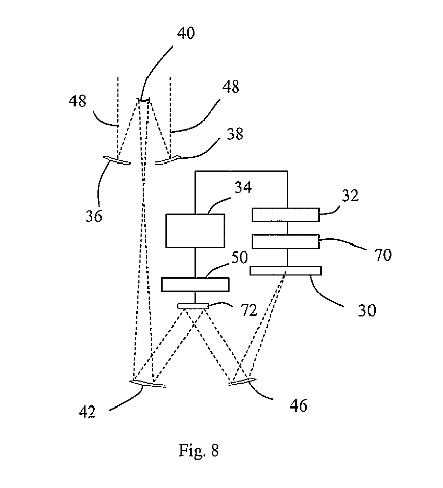

Une autre variante du dispositif de la figure 3 est montré sur la figure 8. La variante est identique au dispositif de la figure 3, à part du remplacement du miroir de type tip/tilt 44 avec un miroir fixe 72 et la présence d'une matrice de commutation 70 entre la matrice d'éléments de détection 30 et l'unité de stockage et de commande 34.

Lors d'opération de la variante de la figure 8, le rayonnement est fixe sur le plan focal et le rayonnement n'est pas déplacé pendant le temps d'intégration. En revanche, la matrice de commutation est adaptée à changer les liaisons entre les éléments de détection et les mémoires de l'unité de stockage et de commande 34 pendant le temps d'intégration. La matrice de commutation lie chaque mémoire à une série des éléments de détection différent. Ainsi, chaque mémoire accumule les signaux d'origine des éléments de détection différent pendant le temps d'intégration. Pour chacune des mémoires, le lien à chacun des éléments de détection de la série est maintenu pendant un intervalle de détection respectif, autrement dit un temps d'intégration élémentaire.

Les liens et les temps d'intégration élémentaires sont choisis pour représenter un filtre. Ainsi, l'invention fournit un système alternatif, qui n'est pas un système opto-mécanique, pour filtrer les signaux avant échantillonnage.

Maintenant, l'aspect théorique vérifiant la validité théorique du principe de convolution opto-mécanique, ou avant échantillonnage, est décrit. La blancheur du bruit ainsi que son rapport signal sur bruit sont établis dans le cas d'un bruit composé d'un bruit de détection (RON) et d'un bruit photonique (hypothèse classique).

On rend compte aussi de simulations numériques dans le cas de l'application opto-mécanique d'un "petit" filtre 7x7 suivant des positions par pas de demi-pixel et composant un filtre anti-repliement de spectre avec un filtre de réhaussement de contraste de type laplacien (permettant une sorte de déconvolution aveugle de l'image brute).

Les simulations numériques sont intéressantes pour un autre exemple d'application de ce filtre sur un système d'observation depuis l'orbite GEO avec un pas de 1.2 m où $\alpha$ est égal à 3.53e-3.

Dans le cas de l'observation depuis l'orbite GEO, un système de correction de la ligne de visée par miroir de tip/tilt est a priori incontournable. Les performances actuelles (rapidité et précision) de ces miroirs (FSM pour Fast Steering Mirror) sont tout à fait suffisantes pour les besoins de la convolution opto-mécanique (une précision de 0.3 $\mu$rad rms et une vitesse maximale de 3 rad/s permet, par exemple, sur le système d'observation déployable des décalages latéraux du plan focal avec une précision de l'ordre du 20[ième] de pixel (rms) et un temps de transition entre deux positions espacées d'un demi-pixel d'environ 1 $\mu$s.)

**Notations et hypothèses**

On considère un instrument d'optique de tache image $h(x, y)$. Sans perte de généralité, on supposera que la fréquence d'échantillonnage $fe$ de la matrice d'éléments de détection en sortie de cet instrument est égale à 1.

La fonction de transfert de cet instrument, notée $H(fx,fy)$ a, par définition, une fréquence de coupure notée $fc$ :

$$\forall (fx, fy) / \sqrt{fx^2 + fy^2} > fc \quad H(fx, fy) = 0 \tag{4}$$

On note par $o(x,y)$ l'objet observé, dont la transformée de Fourier est notée $O(fx, fy)$. La luminance moyenne de l'objet observé est noté $Lmoy$.

On suppose, en première approximation que l'image $m$- exprimée en nombre d'électrons - issue de l'observation pendant le temps d'intégration T de l'objet o par l'instrument d'optique vérifie :

$$m(kx, ky) = m_0(kx, ky) + b(kx, ky)$$
$$m_0(kx, ky) = \gamma \int_{t_0}^{t_0+T} h * o(kx - \delta x(t), ky - \delta y(t)) \, dt \tag{5}$$

où :

- $(\delta x, \delta y)$ correspond à un éventuel bougé relatif entre l'objet et la matrice d'éléments de détection durant le temps d'intégration T .
- $\gamma$ correspond au nombre d'électrons captés par seconde au niveau de la matrice d'éléments de détection ($\gamma$ dépend de la surface collectrice, de l'IFOV (champ de vue d'instrument) au carré, du rendement des détecteurs, du taux de transmission optique, de la largeur et du centre de filtre spectral).
- b correspond au bruit de mesure.

Le bruit b est supposé blanc et gaussien. L'écart type $\sigma_b$- en nombre d'électrons - au point de mesure ($kx, ky$) est la somme quadratique d'un écart type de bruit de détection et d'un écart type de bruit photonique :

$$\sigma_b\left(kx, ky\right) = \sqrt{\sigma_{det}^2 + m_0\left(kx, ky\right)} \qquad (6)$$

La moyenne sur l'image de cet écart type, notée $\sigma_b$ vérifie :

$$\overline{\sigma_b} = \sqrt{\sigma_{det}^2 + \gamma TLmoy} \qquad (7)$$

Le rapport signal sur bruit (RSB) est alors :

$$RSB = \frac{\gamma TLmoy}{\sqrt{\sigma_{det}^2 + \gamma TLmoy}} \qquad (8)$$

Soit $s$ l'entier le plus proche par valeur supérieure du double de la fréquence de coupure $fc$ :

$$s = \lceil 2fc \rceil \qquad (9)$$

Sur-échantillonner le signal h * o d'un facteur s permet de respecter la condition du théorème de Shannon. Donc si $m_0^{(s)}\left(kx, ky\right)$ correspond à l'échantillonné de $h * o$ à la cadence $\frac{1}{s}$, on a

$$m_0^{(s)}\left(kx, ky\right) = \gamma\, h * o\left(\frac{kx}{s}, \frac{ky}{s}\right) \qquad (10)$$

et sa transformée de Fourier vérifie :

$$\forall\left(fx, fy\right) \in \left[-\frac{1}{2s}, \frac{1}{2s}\right] \times \left[-\frac{1}{2s}, \frac{1}{2s}\right] \qquad M_0^{(s)}\left(fx, fy\right) = H\left(fx, fy\right)O\left(fx, fy\right) \qquad (11)$$

**Acquisitions multiples suivant différents temps d'intégration et différentes translations**

On considère maintenant $N$ sous-poses de temps d'intégration ($T_1,...,T_N$), déclenchées aux temps ($t_1,...,t_N$) et décalées spatialement de (($\delta x_1, \delta y_1$),$\cdots$,($\delta x_N, \delta y_N$)) supposés constants durant chaque temps d'intégration:

$$m_0\left(kx, ky; n\right) = \gamma \int_{t_n}^{t_n+T_n} h * o(kx - \delta x_n, ky - \delta y_n) \, dt$$
$$= \gamma T_n \, h * o(kx - \delta x_n, ky - \delta y_n) \tag{12}$$

Chaque acquisition élémentaire est en fait bruitée :

$$m(kx, ky; n) = m_0(kx, ky; n) + b(kx, ky; n) \tag{13}$$

L'écart type du bruit de l'acquisition n au point ($kx, ky$) est alors égal à :

$$\sigma_b\left(kx, ky; n\right) = \sqrt{\sigma_{\text{dot}}^2 + \gamma T_n \, h * o(kx - \delta x_n, ky - \delta y_n)} \tag{14}$$

On note $m_0$ (resp. $m$) la somme des différentes acquisitions sans bruit (resp. avec bruit) :

$$m_0(kx, ky) = \sum_{n=1}^{N} m_0\left(kx, ky; n\right)$$
$$m(kx, ky) = \sum_{n=1}^{N} m\left(kx, ky; n\right) \tag{15}$$

Dans ces conditions,

$$m(kx, ky) = m_0(kx, ky) + b(kx, ky) \tag{16}$$

Avec

$$b(kx, ky) = \sum_{n=1}^{N} b\left(kx, ky; n\right) \tag{17}$$

Les termes $b(kx, ky, n)$ étant indépendants et gaussien, b est aussi un bruit blanc gaussien d'écart type $\sigma_b$. La valeur de cet écart type en présence de bruit de détection dépend du mode d'acquisition des différentes sous-poses :

(1) les sous-poses sont acquises continûment par la matrice d'éléments de détection qui ne cesse d'intégrer les photons durant les N déplacements (($\delta x_1, \delta y_1$),...,($\delta x_N, \delta y_N$));
(2) les sous-poses font l'objet de $N$ images distinctes.

Dans le cas (1), le bruit de détection n'est compté qu'une seule fois, et *N* fois dans le cas (2). Par conséquent :

$$\sigma_b\left(kx, ky\right) = \sqrt{K\sigma_{\text{det}}^2 + \gamma\sum_{n=1}^{N} T_n\, h * o\left(kx + \delta x_n, ky + \delta y_n\right)}$$
$$= \sqrt{K\sigma_{\text{det}}^2 + m_0\left(kx, ky\right)} \tag{18}$$

et la moyenne de l'écart type vérifie :

$$\overline{\sigma_b} = \sqrt{K\sigma_{\text{det}}^2 + \gamma\, Lmoy} \tag{19}$$

Où:

$$K = \begin{cases} 1 \text{ dans le cas (1)} \\ N \text{ dans le cas (2)} \end{cases} \tag{20}$$

Pour toute la suite, on ne considérera que le cas (1).

**Application à une convolution opto-mécanique**

On désire appliquer une filtre de convolution g (du support fréquentiel inclut dans [-½$_s$,½$_s$]X[-½$_s$,½$_s$]) au signal capté par l'instrument d'optique (*i.e. h * o*) juste avant sonéchantillonnage par la matrice d'éléments de détection.

Compte tenu de l'hypothèse (9), il est équivalent d'appliquer le filtre numérique $g^{(s)}$ (supposé d'extension [-*P*, *P*] x [-*P, P*]) au signal sur-échantillonné $m_0^{(s)}$ (*cf.* (10)).

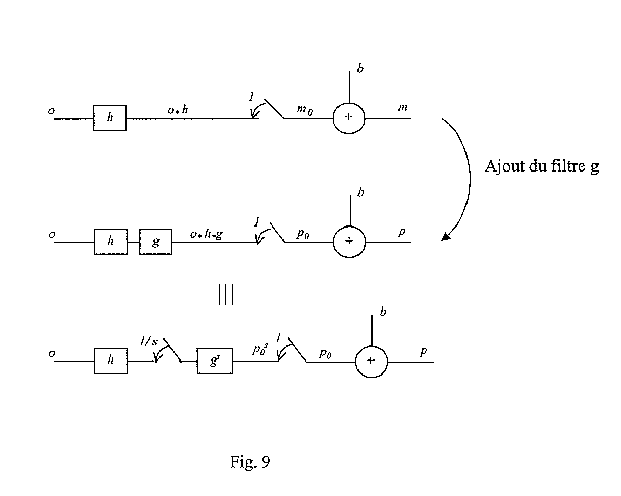

On supposera que le filtre g est normalisé de telle sorte que la somme de ces éléments soit égale à 1 *: g* ne modifie pas la moyenne. L'application du filtre est montrée schématiquement dans la figure 9.

On a alors :

$$p_0^{(s)}\left(lx, ly\right) = g^{(s)} * m_0^{(s)}\left(lx, ly\right)$$
$$\stackrel{\Delta}{=} \sum_{mx=-P}^{P}\sum_{my=-P}^{P} g^{(s)}\left(mx, my\right) m_0^{(s)}\left(lx - mx, ly - my\right) \tag{21}$$
$$= \gamma\sum_{mx=-P}^{P}\sum_{my=-P}^{P} g^{(s)}\left(mx, my\right) h * o\left(\frac{lx}{s} - \frac{mx}{s}, \frac{ly}{s} - \frac{my}{s}\right)$$

Et donc, au niveau de la matrice d'éléments de détection,

$$p_0\left(kx, ky\right) = p_0^s\left(skx, sky\right)$$
$$= \gamma\sum_{mx=-P}^{P}\sum_{my=-P}^{P} g^s\left(mx, my\right) h * o\left(kx - \frac{mx}{s}, ky - \frac{my}{s}\right) \tag{22}$$

Pour la suite, nous avons besoin de définir l'ensemble $I^+ = \left\{ c_1^+, \cdots c_{N^+}^+ \right\}$ (resp. $I^- = \left\{ c_1^-, \cdots c_{N^-}^+ \right\}$) des couples d'indices *(mx,my)* pour lesquelles $g^s$, est positif (resp. négatif). On a alors, en tenant compte de valeurs du filtre nulle (ou quasi-nulle) :

$$N^+ + N^- \leq (2P + 1)^2 \tag{23}$$

et

$$p_0^{(s)}(lx, ly) = p_0^{(s)+}(lx, ly) - p_0^{(s)-}(lx, ly)$$

$$p_0^{(s)+}(lx, ly) = \gamma \sum_{k=1}^{N^+} \left| g^{(s)}\left( c_k^+ \right) \right| h * o\left( \frac{lx}{s} - \frac{c_k^+(1)}{s}, \frac{lx}{s} - \frac{c_k^+(2)}{s} \right) \tag{24}$$

$$p_0^{(s)-}(lx, ly) = \gamma \sum_{k=1}^{N^-} \left| g^{(s)}\left( c_k^- \right) \right| h * o\left( \frac{lx}{s} - \frac{c_k^-(1)}{s}, \frac{lx}{s} - \frac{c_k^-(2)}{s} \right)$$

On considère alors N+ acquisitions de durée $\left( T_1^+, \cdots, T_{N^+}^+ \right)$ et de décalage $\left( \left( \delta x_1^+, \delta y_1^+ \right), \cdots, \left( \delta x_{N^+}^+, \delta y_{N^+}^+ \right) \right)$ vérifiant:

$$T_k^+ = \alpha \left| g^s\left( c_k^+ \right) \right|$$

$$\left( \delta x_k^+, \delta y_k^+ \right) = \left( \frac{c_k^+(1)}{s}, \frac{c_k^+(2)}{s} \right) \tag{25}$$

Le coefficient $\alpha$ est un réel positif jouant le rôle de coefficient de proportionnalité entre les divers temps d'intégration. Le choix de $\alpha$ est discuté plus en avant dans le texte.
Alors, suivant les relations (15) à (20), on a :

$$m^+(kx, ky) = m_0^+(kx, ky) + b^+(kx, ky) \tag{26}$$

où:

$$m_0^+(kx, ky) = \gamma \sum_{k=1}^{N^+} T_k^+ h * o\left( kx - \delta x_k^+, ky - \delta y_k^+ \right)$$

$$= \alpha \gamma \sum_{k=1}^{N^+} \left| g^s\left( c_k^+ \right) \right| h * o\left( kx - \frac{c_k^+(1)}{s}, ky - \frac{c_k^+(2)}{s} \right) \tag{27}$$

$$= \alpha p_0^{(s)+}\left( s\, kx, s\, ky \right)$$

et

$$\sigma_b^+\left(kx,ky\right) = \sqrt{K^+\sigma_{det}^2 + \alpha m_0^+\left(kx,ky\right)} \tag{28}$$

De même, on peut réaliser $N^-$ acquisitions de durée $\left(T_1^-,\cdots,T_{N^-}^-\right)$ et de décalage $\left(\left(\delta x_1^-,\delta y_1^-\right),\cdots,\left(\delta x_{N^-}^-,\delta y_{N^-}^-\right)\right)$ pour obtenir la somme $m^-$.

De manière numérique, on soustrait les deux images $m^+$ et $m^-$, on obtient alors une image p vérifiant :

$$\begin{aligned}p\left(kx,ky\right) &= m^+\left(kx,ky\right) - m^-\left(kx,ky\right)\\ &= p_0\left(kx,ky\right) + b\left(kx,ky\right)\end{aligned} \tag{29}$$

Le bruit b est toujours un bruit blanc, gaussien d'écart type $\sigma_b$ (*kx, ky*) au point (*kx, ky*) :

$$\sigma_b\left(kx,ky\right) = \sqrt{2\sigma_{det}^2 + \alpha\left(m_0^-\left(kx,ky\right) + m_0^+\left(kx,ky\right)\right)} \tag{30}$$

L'écart type $\overline{\sigma_b}$ du bruit *b* sur l'ensemble de l'image est alors égal à:

$$\overline{\sigma_b} = \sqrt{2\sigma_{det}^2 + \alpha\gamma\|g^s\|_{L_1} L_{moy}} \tag{31}$$

Le $RSB_g$ résultant de l'application du filtre g vérifie donc :

$$RSB_g = \frac{\gamma\alpha Lmoy}{\sqrt{2\sigma_{det}^2 + \gamma\alpha\|g^{(s)}\|_{L1} Lmoy}} \tag{32}$$

Le temps d'intégration $T$ cumulant les temps d'intégrations $T^+$ et $T^-$ vérifie :

$$T = \alpha\|g^{(s)}\|_{L1} \tag{33}$$

Par conséquent, si l'on néglige le doublement de la variance du bruit de détection, pour un même temps d'intégration, l'application du noyau g par convolution opto-mécanique, dégrade la RSB d'un facteur égal à la norme *L1* de filtre *g*.

$$RSB_g = \frac{1}{\|g^{(s)}\|_{L1}} \frac{\gamma TLmoy}{\sqrt{2\sigma_{\det}^2 + \gamma TLmoy}} \approx \frac{1}{\|g^{(s)}\|_{L1}} RSB \qquad (34)$$

Le facteur $\alpha$ joue un rôle important car il permet de contrôler le temps d'intégration globale $T$ mais aussi le rapport signal sur bruit après convolution $RSB_g$ ou encore le temps d'intégration maximale $T_{max}$ sur une des sous-poses :

$$T_{\max} = \alpha \max(|g^{(s)}|) \qquad (35)$$

Cette valeur de $T_{max}$ est important à mettre en parallèle avec les temps maximaux de saturation des détecteurs ou de stabilité maximale de ligne de visée.

Grâce aux $N^+$ et $N^-$ acquisitions décalées suivant des multiples de s$^{ième}$ de pixel et la soustraction des deux images intégrées résultantes $m^+$ et $m^-$, il est donc possible d'appliquer un filtre de convolution avant l'échantillonnage par la matrice d'éléments de détection, tout en conservant un bruit de mesure blanc, et non pas coloré par l'application du filtre.

Cette possibilité permet donc, toujours, d'appliquer par un système opto-mécanique un filtre permettant à la fois une atténuation du repliement de spectre et une éventuelle déconvolution.

**Exemple de filtre applicable par convolution opto-mécanique (s = 2)**

On suppose ici que s est égal à 2 (i.e. $fc \in \left[\frac{1}{2}, 1\right]$)

Le filtre $g^{(2)}$ choisi comme exemple est un filtre 7x7 résultant de la convolution d'un filtre anti-repliement de bande-passante $\left[-\frac{1}{2}, \frac{1}{2}\right]$ avec, un filtre de rehaussement de contraste de type $m-\lambda\nabla m$ :

$$g^{(2)} = \frac{1}{16}\begin{bmatrix} 1 & 2 & 1 \\ 2 & 4 & 2 \\ 1 & 2 & 1 \end{bmatrix} * \left( \underbrace{\begin{bmatrix} 0 & 0 & 0 & 0 & 0 \\ 0 & 0 & 0 & 0 & 0 \\ 0 & 0 & 1 & 0 & 0 \\ 0 & 0 & 0 & 0 & 0 \\ 0 & 0 & 0 & 0 & 0 \end{bmatrix} - \lambda \begin{bmatrix} 0 & 0 & 1 & 0 & 0 \\ 0 & 0 & 0 & 0 & 0 \\ 1 & 0 & -4 & 0 & 1 \\ 0 & 0 & 0 & 0 & 0 \\ 0 & 0 & 1 & 0 & 0 \end{bmatrix}}_{\approx m-\lambda\nabla m} \right)$$

$$= \frac{1}{16}\begin{bmatrix} 0 & 0 & -\lambda & -2\lambda & -\lambda & 0 & 0 \\ 0 & 0 & -2\lambda & -4\lambda & -2\lambda & 0 & 0 \\ -\lambda & -2\lambda & 1+2\lambda & 2+6\lambda & 1+2\lambda & -2\lambda & -\lambda \\ -2\lambda & -4\lambda & 2+6\lambda & 4+16\lambda & 2+6\lambda & -4\lambda & -2\lambda \\ -\lambda & -2\lambda & 1+2\lambda & 2+6\lambda & 1+2\lambda & -2\lambda & -\lambda \\ 0 & 0 & -2\lambda & -4\lambda & -2\lambda & 0 & 0 \\ 0 & 0 & -\lambda & -2\lambda & -\lambda & 0 & 0 \end{bmatrix} \qquad (36)$$

Les paramètres utiles de $g^2$ sont alors :

| $N^+$ | 9 |
|---|---|
| $N^-$ | 24 |
| $N = N^+ + N^-$ | 33 |
| $\|g^{(2)}\|_{L1}$ | $1 + 6\lambda$ |
| $\max(|g^{(2)}|)$ | $1/4 + \lambda$ |

Les différentes simulations sont faites à partir d'un instrument monopupille de 16 m de diamètre (avec obturation centrale de 5,7 m) placé en orbite géostationnaire. Le pas d'échantillonnage au sol est de 1,2 m.

Les paramètres utiles des simulations sont les suivants :

| $Lmoy$ | 60 W/m$^2$/sr/$\mu$m |
|---|---|
| $\gamma Lmoy$ | 2,64e6 e-/s |
| $\sigma_{det}$ | 63 e- |

La figure suivante présente une coupe de la FTM de l'instrument d'optique (incluant la dégradation de la FTM due aux détecteurs).

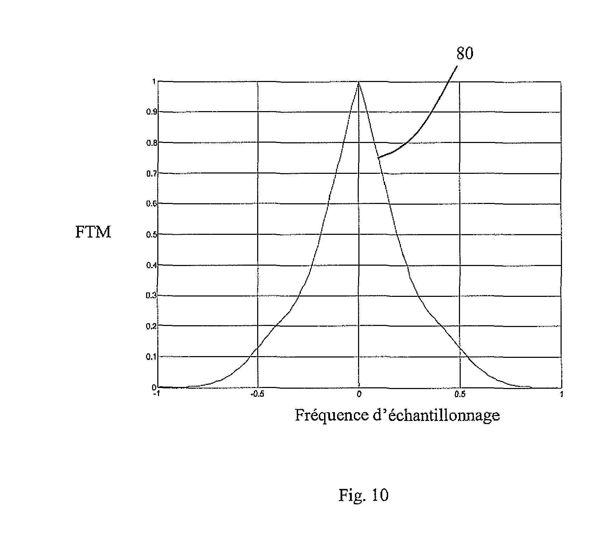

On présente les résultats de l'application du filtre $g^{(2)}(\lambda)$ pour différentes valeurs de $\lambda$ dans les figures 10 à 15. Le paramètre $\alpha$ est tel qu'aucune des sous-poses ne dépasse le temps d'intégration $T = 4{,}2$ ms.

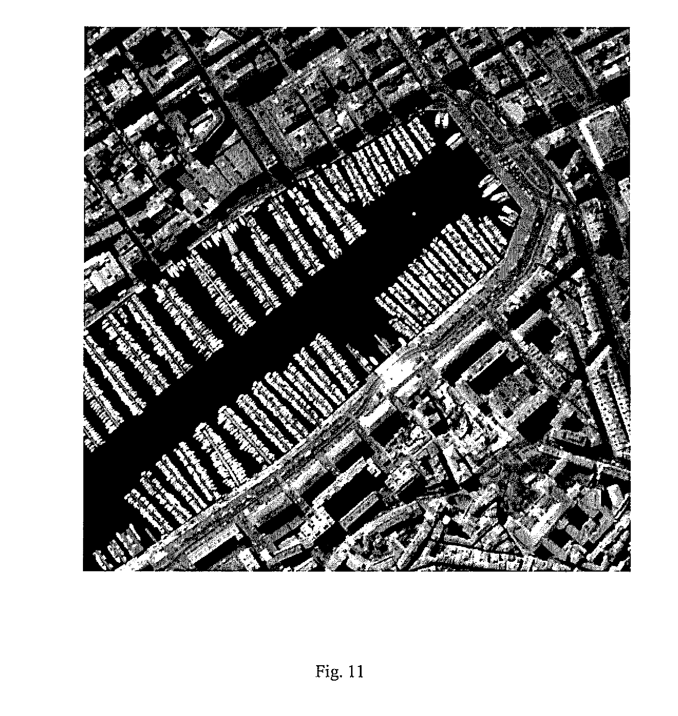

La figure 10 montre la FTM 80 de l'instrument d'optique, dans la direction x. La figure 11 est l'image brute en sortie de l'instrument (T=4,2 ms, RSB=90), pour laquelle le PSNR (le rapport signal-parasites maximum) =25,9 dB.

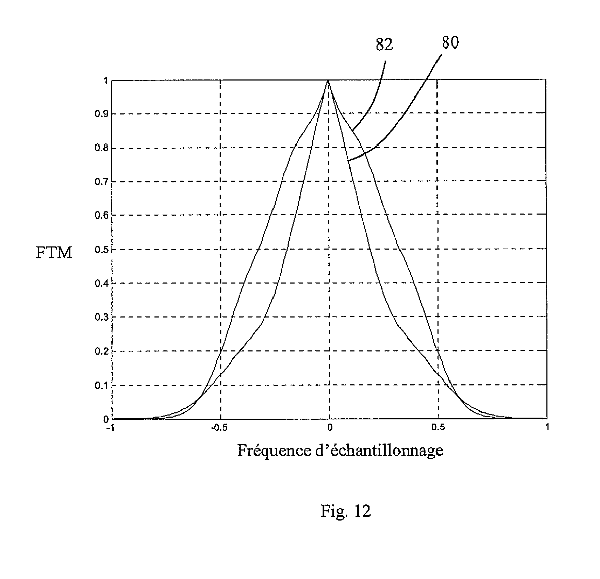

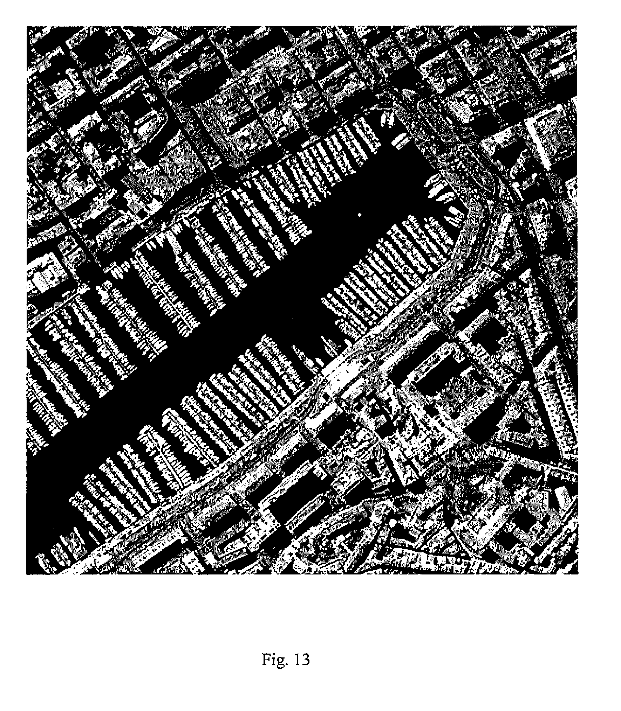

La figure 12 montre la FTM 80 de l'instrument optique, dans la direction x, et la FTM 80 multipliée par la fonction de transfert de $g^{(2)}(\lambda=0{,}5)$ 82. La figure 13 est l'image brute convoluée par $g^{(2)}$ $(\lambda = 0{,}5)$ $(T = 22{,}2$ ms, $T_{max} = 4{,}2$ ms, $RSB_g = 57)$, pour laquelle le PSNR = 29,4 dB.

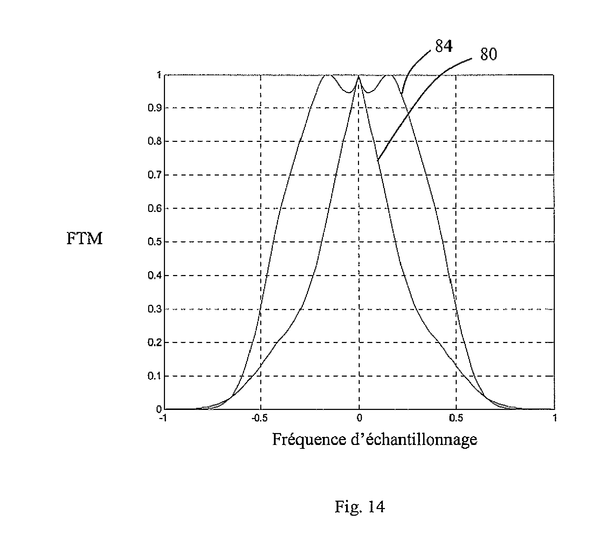

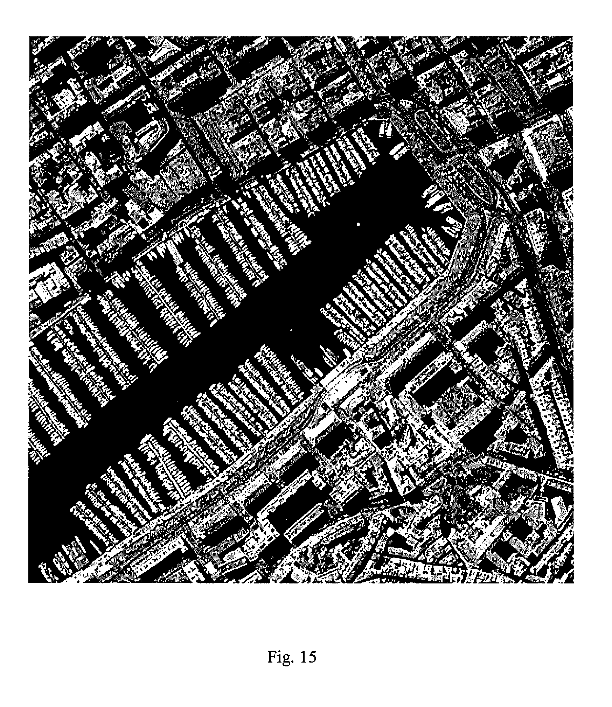

La figure 14 montre la FTM 80 de l'instrument d'optique, dans la direction x, et la FTM multipliée par la fonction de transfert de $g^{(2)}(\lambda=0{,}92)$ 84. La figure 15 est l'image brute convoluée par $g^{(2)}(\lambda=1)$ $(T = 23{,}2$ ms, $T_{max} = 4{,}2$ ms, $RSB_g = 35{,}8)$, pour laquelle le PSNR= 34,0 dB.

On peut voir sur les figures 10 à 15 que la qualité des images est améliorée, et que le rapport signal-parasites maximum est augmenté, par l'application du filtre opto-mécanique avant échantillonnage.

L'invention ne se limite pas aux dispositifs et procédés décrits ci-avant, seulement à titre d'exemple, mais elle englobe toutes les variantes que pourra envisager l'homme de l'art dans le cadre des revendications ci-après.

## Revendications

**1.** Dispositif imageur comprenant : des moyens de détection comportant une matrice d'éléments de détection (30) pour générer des signaux de détection représentatifs d'un rayonnement reçu, des moyens (36, 38, 40, 42, 44, 46) pour diriger un faisceau de rayons en direction des moyens de détection, des moyens de stockage (32) comportant plusieurs éléments de stockage pour accumuler pendant un temps d'intégration les signaux de détection obtenus par la matrice d'éléments de détection (30), chaque élément de stockage lié à un des éléments de détection, et des moyens de traitement (34) configurés pour échantillonner lesdits signaux de détection accumulés pendant le temps d'intégration, **caractérisé en ce que** ledit dispositif comporte des moyens de filtrage (34, 44, 50) pour appliquer un filtre audits signaux de détection avant l'échantillonnage desdits signaux de détection accumulés, les éléments de détection sont séparés par un écart de séparation, les positions de détection voisines étant séparées par des écarts de position et lesdits écarts de position étant égaux ou inférieurs à l'écart de séparation, et sont sélectionnés afin que le filtre corresponde à un filtre anti-repliement.

**2.** Dispositif selon la revendication 1, **caractérisé en ce que** les moyens de filtrage comportent des moyens de déplacement pour déplacer lesdits moyens de détection par rapport audit faisceau ou pour déplacer ledit faisceau par rapport à lesdits moyens de détection.

**3.** Dispositif selon la revendication 2, **caractérisé en ce que** lesdits moyens de déplacement sont configurés de manière à mettre en place la matrice d'éléments de détection et le faisceau dans une série de positions de détection relatives pendant le temps d'intégration.

**4.** Dispositif selon la revendication 3, **caractérisé en ce que** chacune des positions de détection est maintenue pendant un des intervalles de détection.

**5.** Dispositif selon l'une quelconque des revendications 3 à 4, **caractérisé en ce qu'**au moins un des intervalles de détection est différent d'au moins un des autres intervalles de détection.

**6.** Dispositif selon la revendication 1, **caractérisé en ce que** l'écart de position est un sous-multiple de l'écart de séparation.

**7.** Dispositif selon la revendication 1, **caractérisé en ce que** ledit sous-multiple est la moitié dudit écart de séparation entre les éléments de détection.

**8.** Dispositif selon l'une quelconque des revendications 3 à 7, **caractérisé en ce que** le filtre comporte un ensemble de coefficients négatifs et un ensemble de coefficients positifs, et un premier ensemble des intervalles de détection représente l'ensemble des coefficients négatifs, et un deuxième ensemble des intervalles de détection représente l'ensemble des coefficients positifs.

**9.** Dispositif selon la revendication 11, **caractérisé en ce que** les moyens de traitement sont configurés de manière à générer un premier signal d'image selon les signaux de détection accumulés pendant le premier ensemble des intervalles de détection, et les moyens de traitement sont configurés de manière à générer un deuxième signal d'image selon les signaux de détection accumulés pendant le deuxième ensemble des intervalles de détection.

**10.** Dispositif selon la revendication 9, **caractérisé en ce que** les moyens de traitement sont configurés de manière à soustraire le premier signal d'image et le deuxième signal d'image pour obtenir un signal d'image composé.

**11.** Dispositif selon la revendication 1, **caractérisé en ce que** les moyens de filtrage comportent une matrice de commutation qui est adaptée à changer les liaisons entre les éléments de détection et les éléments de stockage de telle façon que chacun des signaux de détection accumulés comprend les signaux de détection d'un élément de détection respectif et les signaux de détection d'au moins un autre élément de détection.

**12.** Dispositif selon la revendication 11, **caractérisé en ce que** la matrice de commutation est opérable de telle façon que chacun des éléments de stockage est lié à chaque élément de détection d'un ensemble respectif des éléments de détection pendant le temps d'intégration.

**13.** Dispositif selon la revendication 12, **caractérisé en ce que**, pour chacun des éléments de stockage, la matrice de commutation est configurée pour lier ledit élément de stockage à chaque élément de détection dudit ensemble respectif des éléments de détection pendant un intervalle de détection respectif.

**14.** Dispositif selon l'une quelconque des revendications 11 à 13, **caractérisé en ce qu'**au moins un des intervalles de détection est différent d'au moins un des autres intervalles de détection.

**15.** Dispositif selon l'une quelconque des revendications 11 à 14, **caractérisé en ce que** les ensembles des éléments de détection et les intervalles de détection sont sélectionnés afin que le filtre comporte un filtre de déconvolution.

**16.** Dispositif selon l'une quelconque des revendications 13 à 15, **caractérisé en ce que** le filtre comporte un ensemble de coefficients négatifs et un ensemble de coefficients positifs, et un premier ensemble des intervalles de détection représente l'ensemble des coefficients négatifs, et un deuxième ensemble des intervalles de détection représente l'ensemble des coefficients positifs.

**17.** Dispositif selon la revendication 16, **caractérisé en ce que** les moyens de traitement sont configurés de manière à générer un premier signal d'image selon les signaux de détection accumulés pendant le premier ensemble des intervalles de détection, et les moyens de traitement sont configurés de manière à générer un deuxième signal d'image selon les signaux de détection accumulés pendant le deuxième ensemble des intervalles de détection.

**18.** Dispositif selon la revendication 17, **caractérisé en ce que** les moyens de traitement sont configurés de manière à soustraire le premier signal d'image et le deuxième signal d'image pour obtenir un signal d'image composé.

**19.** Dispositif selon l'une quelconque des revendications précédentes, **caractérisé par le fait que** le rayonnement est la lumière visible.

**20.** Dispositif selon l'une quelconque des revendications précédentes, qui est destiné à être une partie d'un satellite et qui est pour l'observation de la Terre.

**21.** Procédé d'acquisition et de traitement d'une image dans lequel:

on fournit des moyens de détection comportant une matrice d'éléments de détection (30) ;

on fournit des moyens (36, 38, 40, 42, 44, 46) pour diriger un faisceau de rayons en direction des moyens de détection ;

on fournit plusieurs éléments de stockage, chaque élément de stockage lié à un des éléments de détection ;

on génère des signaux de détection utilisant la matrice d'éléments de détection, qui sont représentatifs d'un rayonnement reçu ;

on accumule par les éléments de stockage des signaux de détection qui sont obtenus dans un temps d'intégration ; et

on échantillonne desdits signaux de détection accumulés,

**caractérisé en ce qu'**il comporte en outre la déplacement lesdits moyens de détection par rapport audit faisceau ou ledit faisceau par rapport auxdits moyens de détection pendant le temps d'intégration, ou **en ce qu'**il comporte la changement des liaisons entre les éléments de détection (30) et les éléments de stockage pendant le temps d'intégration.

Fig. 1a

Fig. 1b

Fig. 2a

Fig. 2b

Fig. 3

Fig. 4

Fig. 5

Fig. 6a

*

Fig. 6b

=

Fig. 6c

Échantillonnage par la matrice de détection

Fig. 6d

Fig. 7a

Fig. 7b

Fig. 7c

Échantillonnage par la matrice de détection

Fig. 7d

Fig. 8

Ajout du filtre g

Fig. 9

Fig. 10

Fig. 11

Fig. 12

Fig. 13

Fig. 14

Fig. 15

**Office européen des brevets**

**RAPPORT DE RECHERCHE EUROPEENNE**

Numéro de la demande

EP 08 15 8981

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 702 325 A (FRANCE TELECOM [FR]; CENTRE NAT RECH SCIENT; FRANCE ETAT ARMEMENT) 9 septembre 1994 (1994-09-09) <br> * page 9, ligne 26 - ligne 30 * <br> * page 4, ligne 1 - ligne 3 * <br> * page 2, ligne 9 - ligne 20 * <br> ----- | 1-25 | INV. <br> H04N3/15 <br> H04N5/217 |

**DOMAINES TECHNIQUES RECHERCHES (IPC)**

H04N

Le présent rapport a été établi pour toutes les revendications

| Lieu de la recherche | Date d'achèvement de la recherche | Examinateur |
|---|---|---|
| La Haye | 5 septembre 2008 | Bequet, Thierry |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 08 15 8981

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-09-2008

| Document brevet cité au rapport de recherche | Date de publication | Membre(s) de la famille de brevet(s) | Date de publication |
|---|---|---|---|
| FR 2702325 A | 09-09-1994 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9705451 A